# EUROPÄISCHE PATENTANMELDUNG

(11) **EP 1 338 379 A2**
(43) Veröffentlichungstag der Anmeldung: **27.08.2003**
(21) Anmeldenummer: 03001665.3
(22) Anmeldetag: 24.01.2003
(51) Int. Cl.: B23Q 11/00

(54) **Spänesammelsystem**

(30) Priorität: 22.02.2002 DE 10207537
(71) Anmelder: Mafell AG, 78727 Oberndorf a.N. (DE)
(72) Erfinder: Eisenbeis, Dieter, 72160 Horb a.N. (DE)
(74) Vertreter: Manitz, Finsterwald & Partner GbR

(57) **Zusammenfassung**

Die Erfindung betrifft ein Spänesammelsystem, insbesondere für Tischkreissägen und Unterflur-Zugsägen, mit einem eine untere Sägeblattabdeckung bildenden Schutzgehäuse, einem an das Schutzgehäuse angeschlossenen Abführkanal für im Sägebetrieb anfallende Späne und anfallenden Staub, sowie einer Sammeleinrichtung, in die der Abführkanal mündet, wobei das Schutzgehäuse als Druck- und Auswurfraum ausgebildet und über den Abführkanal mit einem passiven Sammelbehälter verbunden ist, in dem im wesentlichen Umgebungsdruck oder ein geringer Überdruck herrscht, der kleiner ist als der im Schutzgehäuse zumindest durch das rotierende Sägeblatt erzeugte Überdruck.

## Beschreibung

Die Erfindung betrifft ein Spänesammelsystem, insbesondere für Tischkreissägen und Unterflur-Zugsägen, mit einem eine untere Sägeblattabdeckung bildenden Schutzgehäuse, einem an das Schutzgehäuse angeschlossenen Abführkanal für im Sägebetrieb anfallende Späne und anfallenden Staub, sowie einer Sammeleinrichtung, in die der Abführkanal mündet.

Im holz- und kunststoffverarbeitenden Handwerk müssen bei der Materialbearbeitung anfallende Späne und Staub so entfernt werden, dass geltende Arbeitsschutzbestimmungen erfüllt werden und eine Verschmutzung des Arbeitsplatzes durch das anfallende Material verhindert wird. Insbesondere bei transportablen Tischkreissägen und Unterflur-Zugsägen, die vornehmlich auf der jeweiligen Baustelle eingesetzt werden und daher nicht an eine fest installierte Absauganlage angeschlossen werden können, besteht die Notwendigkeit einer einfach handhabbaren und dennoch effektiven Spänebeseitigung. Unabhängig von dem Aspekt der Arbeitsplatzsicherheit ist hierbei von Bedeutung, dass ohne spezielle Maßnahmen zur Späneentfernung die abschließende Reinigung des Arbeitsplatzes häufig mehr Zeit erfordert als der eigentliche Sägebetrieb.

Bekannt sind transportable Absauggeräte in Form von Staubsaugern, die über einen Absaugschlauch direkt an die jeweilige Bearbeitungsmaschine angeschlossen werden und auf diese Weise Späne und Staub dort entfernen, wo sie anfallen. Während mit derartigen Sauggeräten die für geschlossene Räume geltenden Bestimmungen hinsichtlich der maximal zulässigen Feinstaub- oder Reststaubkonzentration zwar eingehalten werden können, ist von Nachteil, dass mit derartigen Absauggeräten von dem Handwerker eine zusätzliche Maschine von nicht unerheblichem Volumen und Gewicht transportiert werden muss und außerdem ein zusätzlicher Stromanschluss erforderlich ist.

Aufgabe der Erfindung ist es daher, eine Möglichkeit zur einfach handhabbaren und gleichzeitig wirksamen Entfernung von Spänen und Staub an holz- und kunststoffverarbeitenden Maschinen zu schaffen, wobei insbesondere beim Arbeiten mit transportablen Tischkreissägen und Unterflur-Zugsägen die Beeinträchtigung des Arbeitsplatzes durch das beim Sägen anfallende Material auf ein Minimum reduziert werden soll.

Die Lösung dieser Aufgabe erfolgt durch die Merkmale des Anspruchs 1 und insbesondere dadurch, dass das Schutzgehäuse als Druck- und Auswurfraum ausgebildet und über den Abführkanal mit einem passiven Sammelbehälter verbunden ist, in dem im wesentlichen Umgebungsdruck oder ein geringer Überdruck herrscht, der kleiner ist als der im Schutzgehäuse zumindest durch das rotierende Sägeblatt erzeugte Überdruck.

Erfindungsgemäß wird das beim Sägen entstehende Material aus dem Schutzgehäuse nicht abgesaugt, sondern der Materialtransport wird durch den vom rotierenden Sägeblatt erzeugten Überdruck im Schutzgehäuse bewirkt, während im Sammelbehälter im wesentlichen Umgebungsdruck oder allenfalls ein geringer Überdruck herrscht. Das Sägeblatt bzw. dessen Verzahnung und das Schutzgehäuse wirken zusammen als ein Gebläse, mit dem Späne und Staub in den Abführkanal gedrückt und in den Sammelbehälter geblasen werden. Das als Druck- und Auswurfraum ausgebildete Schutzgehäuse ist hierzu derart ausgestaltet und insbesondere im unteren Bereich ausreichend abgedichtet, dass das rotierende Sägeblatt darin einen genügend großen Überdruck aufbauen kann. Die Erfindung kommt somit ohne eine zusätzliche Unterdruckquelle aus und nutzt alleine die ohnehin vorhandene Rotationsenergie des Sägeblatts, um einen Späne und Staub abführenden Luftstrom durch den Abführkanal zu erzeugen. Die Funktion des passiven, nicht mit einer Unterdruckquelle versehenen Sammelbehälters beschränkt sich ausschließlich auf das Auffangen des im Luftstrom enthaltenen Materials. Es muss lediglich für ein Entweichen der Luft aus dem Sammelbehälter derart gesorgt werden, dass der im Sammelbehälter herrschende Druck stets kleiner ist als der Überdruck im Schutzgehäuse.

Optimale Strömungsverhältnisse lassen sich gemäß einer bevorzugten Ausführung der Erfindung realisieren, wenn der Übergang vom Schutzgehäuse in den Abführkanal etwa in der Flugbahn des vom rotierenden Sägeblatt weggeschleuderten Materials gelegen ist.

Die Geometrie des Schutzgehäuses und des Abführkanals insbesondere im Bereich des Übergangs ist bevorzugt derart gewählt, dass im Betrieb ausschließlich zumindest näherungsweise laminare Strömungen vorhanden sind, wodurch Aufwirbelungen von Staub bzw. Feinstaub wirksam verhindert werden.

Der Abtransport des Materials kann weiter dadurch gefördert und begünstigt werden, dass der Abführkanal im wesentlichen umlenkungsfrei unter Minimierung des vom Schutzgehäuse zum Sammelbehälter zurückzulegenden Weges verläuft.

Eine besonders vorteilhafte Ausgestaltung der Erfindung besteht darin, dass der Abführkanal als Führungsschiene ausgebildet ist, auf der das Sägeaggregat mit dem Schutzgehäuse längsverschiebbar angeordnet ist.

Des Weiteren wird vorgeschlagen, einen zusätzlichen Absaugkanal vorzusehen, der im Sägebetrieb an eine obere Sägeblattabdeckung angeschlossen ist und vor dem Sammelbehälter in den Abführkanal mündet. Der Luftstrom im Abführkanal erzeugt im Bereich der Einmündung des Absaugkanals gemäß dem Strahlpumpeneffekt einen Unterdruck, mit dem oberhalb des Sägeblatts von diesem mitgenommenes Material, insbesondere Staub, abgesaugt und zusammen mit dem über dem Abführkanal abtransportierten Material dem Sammelbehälter zugeführt wird. Auf diese Weise lässt sich die Feinstaubkonzentration bzw. der Reststaubgehalt weiter reduzieren und ein Höchstmaß an Arbeitsplatzsicherheit erzielen.

Ferner kann vorgesehen sein, den Überdruck im Schutzgehäuse dadurch zu erhöhen, dass zusätzliche Ventilatormittel vorgesehen werden. Als derartige Mittel kann beispielsweise ein zusammen mit dem Sägeblatt rotierendes Lüfterrad dienen. Prinzipiell ist es auch denkbar, ein spezielles Sägeblatt zu verwenden, das mit zusätzlichen Schaufeln versehen ist, die den Ventilator- oder Gebläseeffekt des Sägeblatts verstärken.

Es ist auch möglich, einen unabhängig vom Sägeblatt wirksamen zusätzlichen Ventilator oder Lüfter vorzusehen und diesen im Schutzgehäuse oder im Abführkanal anzuordnen, beispielsweise im Bereich der Einmündung in den Sammelbehälter. Es kann z.B. ein handelsüblicher Kleinlüfter eingesetzt werden, wie er als Massenware im Computer-Bereich erhältlich ist.

Bevorzugt ist vorgesehen, dass der Sammelbehälter wenigstens eine Austrittsöffnung aufweist, aus der die über den Abführkanal einströmende Luft derart entweicht, dass der Druck im Sammelbehälter kleiner ist als der Überdruck im Schutzgehäuse. Der Sammelbehälter kann zumindest bereichsweise von einer mit einer Vielzahl von Austrittsöffnungen versehenen Lochwand begrenzt sein.

Ferner wird vorgeschlagen, zur Vermeidung von Staubaufwirbelungen im Sammelbehälter wenigstens eine Strömungsumlenkeinrichtung vorzusehen, die derart ausgebildet und angeordnet ist, dass die über den Abführkanal einströmende Luft zumindest näherungsweise laminar geführt ist.

Vorzugsweise ist der Sammelbehälter mit einer integrierten Abdeckung versehen, mit der die Austrittsöffnung im Anschluss an den Sägebetrieb verschlossen werden kann. Ein teilweise gefüllter Sammelbehälter kann auf diese Weise sicher bis zum nächsten Einsatz aufbewahrt werden, während ein vollständig gefüllter Sammelbehälter problemlos als Ganzes entsorgt werden kann.

Handhabung und Betrieb des erfindungsgemäßen Spänesammelsystems werden weiter vereinfacht, wenn gemäß einer bevorzugten Ausführungsform der Sammelbehälter zusammenklappbar, -faltbar oder -legbar ist. Insbesondere kann der Sammelbehälter als Einweg-Artikel konzipiert und aus einem recyclebaren Material wie beispielsweise Wellpappe oder Karton hergestellt sein. Der Behälter kann auch aus Kunststoff oder Blech hergestellt und mehrfach verwendet werden.

Die Erfindung betrifft außerdem eine Tischkreissäge oder Unterflur-Zugsäge mit einem erfindungsgemäßen Spänesammelsystem sowie einen Sammelbehälter, der insbesondere für das erfindungsgemäße Spänesammelsystem geeignet ist.

Weitere bevorzugte Ausführungsformen der Erfindung sind auch in den Unteransprüchen, der Beschreibung sowie der Zeichnung angegeben.

Die Erfindung wird im Folgenden beispielhaft unter Bezugnahme auf die Zeichnung beschrieben. Es zeigen:
- Fig. 1: schematisch eine Ausführungsform eines erfindungsgemäßen Spänesammelsystems an einer Tischkreissäge,
- Fig. 2: teilweise eine Tischkreissäge mit einem daran gehalterten erfindungsgemäßen Sammelbehälter, und
- Fig. 3: in einer vergrößerten Darstellung den oberen Bereich des Sammelbehälters von Fig. 2.

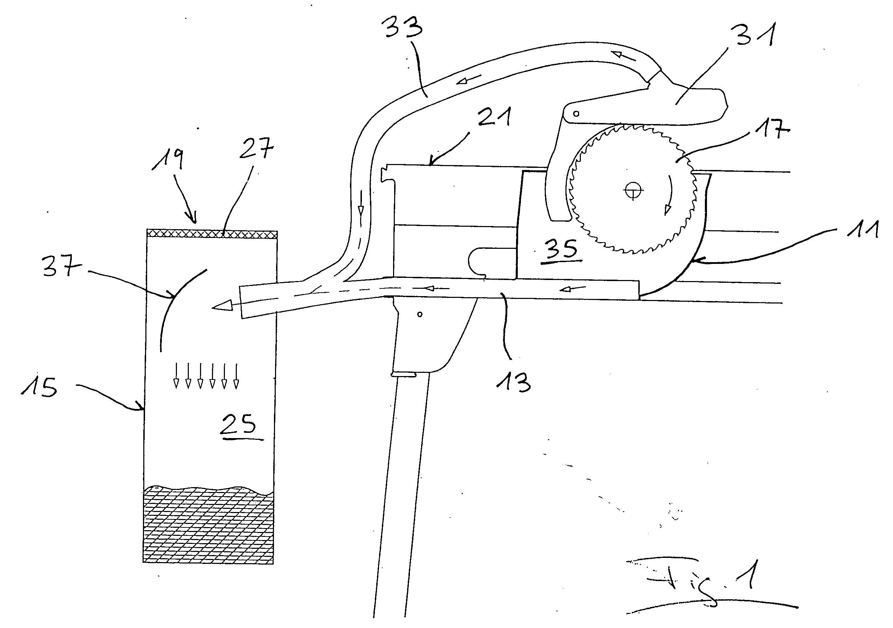

Fig. 1 zeigt eine erfindungsgemäße Tischkreissäge, bei der unterhalb des Sägetisches 21 ein auch als Schutzbehälter bezeichnetes Schutzgehäuse 11 angeordnet ist, in welches das Sägeblatt 17 teilweise eintaucht.

Das Schutzgehäuse 11 ist als Druck- und Auswurfraum 35 ausgebildet, der an der rückwärtigen Unterseite des Schutzgehäuses 11 in einen in den Sägetisch 21 integrierten, horizontal verlaufenden Abführkanal 13 übergeht. Wenn die Säge als Unterflur-Zugsäge ausgebildet bzw. verwendbar ist, dann kann der Abführkanal 13 gleichzeitig als Führungsschiene für das Schutzgehäuse 11 ausgebildet sein, wie es z.B. in der deutschen Patentanmeldung 101 17 489 beschrieben ist.

Der Abführkanal 13 mündet in den Sammelraum 25 eines erfindungsgemäßen Sammelbehälters 15, der nachfolgend näher beschrieben wird. Abweichend von der Darstellung in Fig. 1 kann der Abführkanal 13 auch über seine gesamte Länge, d.h. bis zur Einmündung in den Sammelbehälter 15, horizontal verlaufen.

Im Sammelraum 25 ist ein Umlenkabschnitt 37 angeordnet, mit dem eingeblasenes Material in Richtung des Behälterbodens gelenkt wird und Feinstaubaufwirbelungen verhindert werden. Es können auch mehrere Umlenkeinrichtungen vorgesehen sein. Die Behälteroberseite ist als mit einer Vielzahl von Luftaustrittsöffnungen 19 versehene Lochwand ausgebildet, die mit einem z.B. von einem Vlies gebildeten Filter 27 hinterlegt ist, um ein Austreten des einströmenden Materials aus dem Sammelraum 25 zu verhindern.

Des Weiteren ist bei der in Fig. 1 dargestellten Ausführungsform an eine obere Sägeblattabdeckung 31 ein Absaugschlauch 33 angeschlossen, der vor dem Sammelbehälter 15 in den Abführkanal 13 mündet.

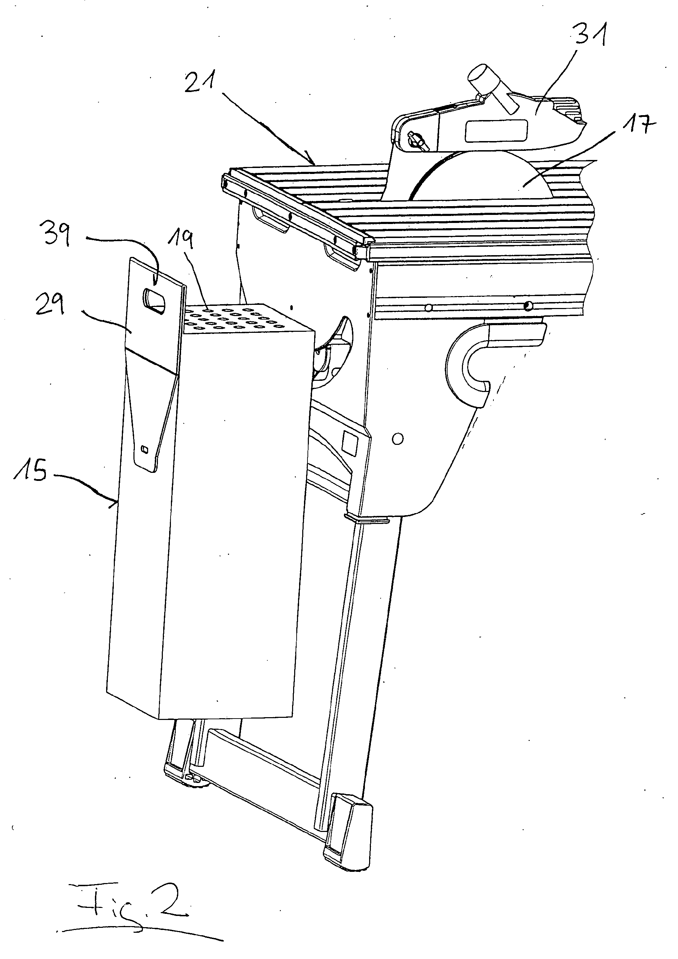

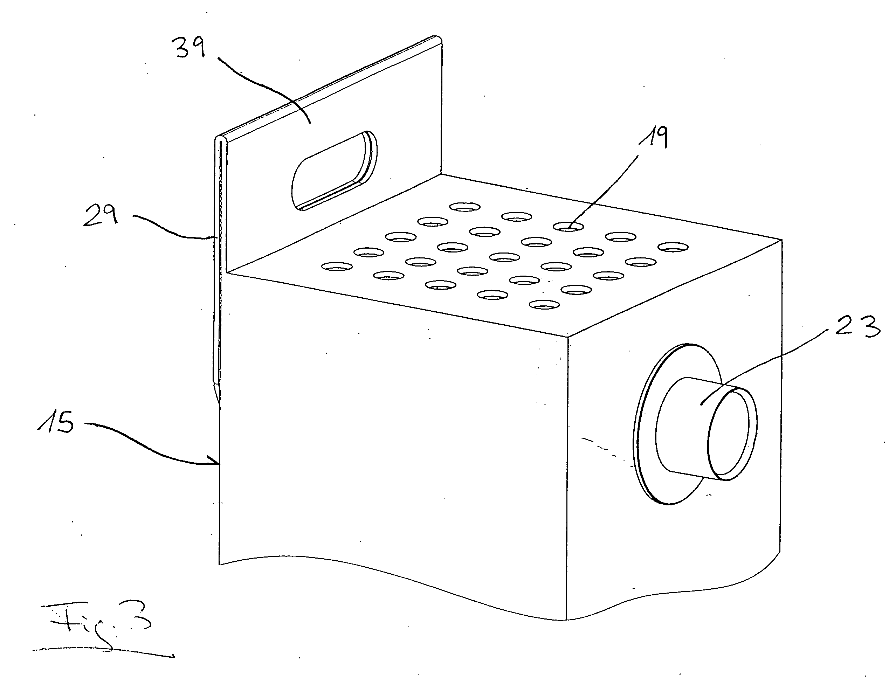

Fig. 2 und Fig. 3 zeigen insbesondere die Ausgestaltung der Behälteroberseite als Lochwand. Ferner ist in Fig. 3 ein Anschlussstutzen 23 dargestellt, der im Bereich des oberen Behälterendes an der im Sägebetrieb dem Sägetisch 21 zugewandten Behälterseite angeordnet ist und über den der Sammelbehälter 15 an den Abführkanal 13 angeschlossen wird. Wie Fig. 2 zeigt, ist der Sammelbehälter 15 im Sägebetrieb direkt am Sägetisch 21 angeordnet, wobei die Halterung des Sammelbehälters 15 am Sägetisch 21 ausschließlich über den mit dem Abführkanal 13 verbundenen Anschlussstutzen 23 erfolgt.

Der Sammelbehälter 15 ist aus Wellpappe oder Karton hergestellt und besitzt daher bei großem Auffangvolumen minimales Eigengewicht. Bevorzugt wird der Behälter 15 zusammengelegt oder -gefaltet geliefert, wodurch der Transport weiter erleichtert wird und der Handwerker problemlos einen Vorrat an Sammelbehältern mit sich führen kann.

Des Weiteren ist der Sammelbehälter 15 mit einer Klapplasche 29 versehen, die im Sägebetrieb gemäß Fig. 2 und Fig. 3 derart gefaltet ist, dass sie als Handgriff 39 dient. Im Anschluss an den Sägebetrieb wird der Handgriff 39 in einen Behälterdeckel verwandelt und hierzu durch Umklappen über die Lochwand gelegt. In diesem die Austrittsöffnungen 19 abdeckenden Verschlusszustand kann die Lasche 29 mittels ihres freien Endbereiches am Behälter 15 fixiert werden.

Während des Sägebetriebs wirken die Verzahnung des rotierenden Sägeblatts 17 und das Schutzgehäuse 11 zusammen als ein Gebläse und erzeugen im Druck- und Auswurfraum 35 einen Überdruck, der einen Luftstrom durch den Abführkanal 13 vom Schutzgehäuse 11 zum Sammelbehälter 15 zur Folge hat. Vom Sägeblatt 17 beim Sägen mitgenommenes Material wird in Richtung des Übergangs vom Schutzgehäuse 11 in den Abführkanal 13 geworfen und folglich über den Abführkanal 13 in den Sammelraum 25 des Sammelbehälters 15 geblasen.

Die in den Sammelraum 25 strömende Luft kann über die Austrittsöffnungen 19 aus dem Behälter 15 entweichen, während das im Luftstrom mitgeführte Material im Sammelraum 25 verbleibt, wobei vergleichsweise schweres Material wie insbesondere Sägespäne schwerkraftbedingt und der Feinstaub unterstützt durch den Umlenkabschnitt 37 nach unten fällt und eventuell aufgewirbelter Sägestaub durch das Filter 27 an einem Entweichen aus dem Sammelraum 25 gehindert wird.

Bei der Ausführungsform von Fig. 1 führt der Luftstrom durch den Abführkanal 13 gemäß dem Strahlpumpeneffekt im Bereich der Einmündung des Absaugkanals 33 in den Abführkanal 13 zu einem Unterdruck, wodurch an der oberen Saugblattabdeckung 31 eine Saugwirkung entsteht. Material, insbesondere Sägestaub, das nicht in den Abführkanal 13 gelangt und vom Sägeblatt 17 aus dem Schutzgehäuse 11 heraus nach oben mitgenommen wird, kann auf diese Weise abgesaugt werden, ohne in die Umgebung zu gelangen.

Wie Fig. 2 zeigt, kann auf den an die obere Sägeblattabdeckung 31 angeschlossenen Saugkanal verzichtet werden. In diesem Fall kann ohne das Vorsehen zusätzlicher Verzweigungsstücke zwischen dem Austrittsende des Austragskanals 13 am Sägetisch 21 und dem Anschlussstutzen 23 des Sammelbehälters 15 gemäß Fig. 2 der Sammelbehälter 15 in unmittelbarer Nähe zum Sägetisch 21 gehaltert werden. -.-.-.

### Bezugszeichenliste

- 11: Schutzgehäuse
- 13: Abführkanal
- 15: Sammelbehälter
- 17: Sägeblatt
- 19: Austrittsöffnung
- 21: Sägetisch
- 23: Anschlussstutzen des Sammelbehälters
- 25: Sammelraum
- 27: Filter
- 29: Lasche, Abdeckung
- 31: obere Sägeblattabdeckung
- 33: Absaugkanal
- 35: Druck- und Auswurfraum
- 37: Umlenkabschnitt
- 39: Griffbereich

## Patentansprüche

1. Spänesammelsystem, insbesondere für Tischkreissägen und Unterflur-Zugsägen, mit einem eine untere Sägeblattabdeckung bildenden Schutzgehäuse (11), einem an das Schutzgehäuse (11) angeschlossenen Abführkanal (13) für im Sägebetrieb anfallende Späne und anfallenden Staub, sowie einer Sammeleinrichtung (15), in die der Abführkanal (13) mündet,
**dadurch gekennzeichnet,**
**dass** das Schutzgehäuse (11) als Druck- und Auswurfraum ausgebildet und über den Abführkanal (13) mit einem passiven Sammelbehälter (15) verbunden ist, in dem im wesentlichen Umgebungsdruck oder ein geringer Überdruck herrscht, der kleiner ist als der im Schutzgehäuse (11) zumindest durch das rotierende Sägeblatt (17) erzeugte Überdruck.

2. Spänesammelsystem nach Anspruch 1,
**dadurch gekennzeichnet,**
**dass** der Übergang vom Schutzgehäuse (11) in den Abführkanal (13) etwa in der Flugbahn des vom rotierenden Sägeblatt (17) weggeschleuderten Materials gelegen ist.

3. Spänesammelsystem nach Anspruch 1 oder 2,
**dadurch gekennzeichnet,**
**dass** der Abführkanal (13) im wesentlichen umlenkungsfrei unter Minimierung des vom Schutzgehäuse (11) zum Sammelbehälter (15) zurückzulegenden Strömungsweges verläuft.

4. Spänesammelsystem nach einem der vorhergehenden Ansprüche,
**dadurch gekennzeichnet,**
**dass** der Abführkanal (13) zumindest in dem sich unmittelbar an das Schutzgehäuse (11) anschließenden Bereich etwa horizontal verläuft.

5. Spänesammelsystem nach einem der vorhergehenden Ansprüche,
**dadurch gekennzeichnet,**
**dass** der Abführkanal (13) in den Sägetisch (21) integriert und der Sammelbehälter(15)imSägebetriebdirektamSägetisch (21) gehaltert ist, insbesondere über einen mit dem Abführkanal (13) verbundenen Anschlussstutzen (23).

6. Spänesammelsystem nach einem der vorhergehenden Ansprüche,
**dadurch gekennzeichnet,**
**dass** der Abführkanal (13) als Führungsschiene ausgebildet ist, auf der das Schutzgehäuse (11) längsverschiebbar angeordnet ist.

7. Spänesammelsystem nach einem der vorhergehenden Ansprüche,
**dadurch gekennzeichnet,**
**dass** zur Erhöhung des Überdrucks im Schutzgehäuse (11) zusätzliche Ventilatormittel vorgesehen sind, insbesondere wenigstens ein zusammen mit dem Sägeblatt (17) rotierendes Lüfterrad und/oder wenigstens ein im Schutzgehäuse (11) oder im Abführkanal (13) angeordneter Ventilator oder Lüfter.

8. Spänesammelsystem nach einem der vorhergehenden Ansprüche,
**dadurch gekennzeichnet,**
**dass** im Sägebetrieb an eine obere Sägeblattabdeckung (31) ein Absaugkanal (33) angeschlossen ist, der vor dem Sammelbehälter (15) in den Abführkanal (13) mündet.

9. Spänesammelsystem nach einem der vorhergehenden Ansprüche,
**dadurch gekennzeichnet,**
**dass** der Sammelbehälter (15) wenigstens eine Austrittsöffnung (19) aufweist, aus der die über den Abführkanal (13) einströmende Luft derart entweicht, dass der Druck im Sammelbehälter (15) kleiner ist als der Überdruck im Schutzgehäuse (11).

10. Spänesammelsystem nach einem der vorhergehenden Ansprüche,
**dadurch gekennzeichnet,**
**dass** der Sammelbehälter (15) zumindest bereichsweise von einer mit einer Vielzahl von Austrittsöffnungen (19) versehenen Lochwand begrenzt ist.

11. Spänesammelsystem nach einem der vorhergehenden Ansprüche,
**dadurch gekennzeichnet,**
**dass** zur Vermeidung von Staubaufwirbelungen im Sammelbehälter (15) wenigstens eine Strömungsumlenkeinrichtung (37) vorgesehen ist, die derart ausgebildet und angeordnet ist, dass die über den Abführkanal (13) einströmende Luft zumindest näherungsweise laminar geführt wird.

12. Spänesammelsystem nach einem der vorhergehenden Ansprüche,
**dadurch gekennzeichnet,**
**dass** der Abführkanal (13) in einen Sammelraum (25) des Sammelbehälters (15) mündet, der durch ein insbesondere als Vlies ausgebildetes Filter (27) von der Austrittsöffnung (19) getrennt ist.

13. Spänesammelsystem nach einem der vorhergehenden Ansprüche,
**dadurch gekennzeichnet,**
**dass** eine Austrittsöffnung (19) mittels einer in den Sammelbehälter (15) integrierten Abdeckung (29) verschließbar ist.

14. Spänesammelsystem nach einem der vorhergehenden Ansprüche,
**dadurch gekennzeichnet,**
**dass** der Sammelbehälter (15) zusammenklappbar, -faltbar oder -legbar ist.

15. Spänesammelsystem nach einem der vorhergehenden Ansprüche,
**dadurch gekennzeichnet,**
**dass** der Sammelbehälter (15) aus einem recyclebaren Material hergestellt ist, insbesondere aus Wellpappe oder Karton.

16. Tischkreissäge oder Unterflur-Zugsäge mit einem Spänesammelsystem nach einem der vorhergehenden Ansprüche.

17. Sammelbehälter, insbesondere für ein Spänesammelsystem nach einem der Ansprüche 1 bis 15, der an einen Abführkanal (13) für in einem Luftstrom mitgeführtes Material anschließbar ist und wenigstens eine Austrittsöffnung (19) aufweist, über welche die einströmende Luft derart entweicht, dass im Sammelbehälter (15) im wesentlichen Umgebungsdruck oder ein geringer Überdruck herrscht, der kleiner ist als ein im Bereich einer Eintrittsöffnung des Abführkanals (13) herrschender Überdruck.

18. Sammelbehälter nach Anspruch 17 mit den einen Sammelbehälter betreffenden Merkmalen eines der Ansprüche 2 bis 15.
